# EUROPÄISCHE PATENTSCHRIFT

(11) **EP 2 698 361 B1**
(45) Veröffentlichungstag und Bekanntmachung des Hinweises auf die Patenterteilung: **29.03.2017**
(21) Anmeldenummer: 13004008.2
(22) Anmeldetag: 12.08.2013
(51) Int. Cl.: C06B 23/00, C08K 5/19

(54) **Verwendung einer ein Polymer und eine ionische Flüssigkeit umfassenden Zusammensetzung**
Use of a compound comprising a polymer and an ionic liquid
Utilisation d'une composition comprenant un polymère et un liquide ionique

(30) Priorität: 17.08.2012 DE 102012016480; 03.05.2013 DE 102013007678
(43) Veröffentlichungstag der Anmeldung: 19.02.2014
(73) Patentinhaber: Diehl BGT Defence GmbH & Co. KG, 88662 Überlingen (DE)
(72) Erfinder: Hahma, Arno, Dr., 91239 Henfenfeld (DE)
(74) Vertreter: Diehl Patentabteilung

(56) Entgegenhaltungen:
- WO-A1-2011/157801
- US-A- 5 099 008
- US-A- 5 431 756
- US-A1- 2008 251 169

## Beschreibung

Die Erfindung betrifft eine Verwendung einer eine ionische Flüssigkeit und ein Polymer umfassenden Zusammensetzung.

Es ist bekannt, ionische Flüssigkeiten als nichtflüchtige Weichmacher in Polyvinylchlorid und Polymethylmethacrylat zu verwenden.

Aus der EP 1 519 988 B2 ist eine Polymerzusammensetzung bekannt, die zumindest ein zumindest teilkristallines Polymer ohne ionische Gruppen und zumindest eine Verbindung mit weichmachenden Eigenschaften aufweist, wobei als Weichmacher 0,1 bis 30 Gew.-% ionische Flüssigkeit enthalten ist. Bei dem Polymer kann es sich um ein Polymer aus der Gruppe der (Co)polyamide, (Co)polyester, Polyurethane, Polyphenylenether, Polyolefine, (Co)polyetheramide, Polyaramide, Polyether(ether)ketone und Polyetheresteramide handeln. Die Polymerzusammensetzung kann als Schmelzkleber, Haftvermittler, Binder, Füllmaterial, Packaging Material, Verträglichkeitsverbesserer zur Herstellung von Polymerblends, Viskositäts- und/oder Löslichkeitsmodifier in Polymermischungen oder -kompositionen oder zur Herstellung von Folien, Filmen, Beschichtungen, Membranen und Formkörpern verwendet werden.

Aus der JP 10265674 A sind Komposite aus ionischen Flüssigkeiten und Polymeren, wie Polyacrylnitril, einer Polyvinyl-Verbindung, einer Polyether-Verbindung, einem Polyamid, einem Polyester oder einem Polycarbonat, bekannt. Die ionischen Flüssigkeiten umfassen Lithiumsalz und entweder ein zyklisches Amidin oder ein Pyridin-Oniumsalz. Als Anwendung werden Elektrolytkondensator, fester Elektrolyt, antistatisches Agens für elektronische Instrumente und elektrostatisches Abschirmungsmaterial angegeben.

Aus der US 2011/0245062 A1 ist eine Zusammensetzung zum Strangpressen bekannt, welche Cellulose und/oder ein Derivat davon, eine ionische Flüssigkeit, in welcher die Cellulose und/oder das Derivat löslich ist, und ein Keramikmaterial umfasst. Bei dem Cellulosederivat kann es sich um Nitrocellulose handeln. Die der hier offenbarten Erfindung zu Grunde liegende Aufgabe bestand in der Bereitstellung einer keramischen Strangpresszusammensetzung, welche mit hoher Geschwindigkeit und ohne Trockenschwindungsrisse stranggepresst werden kann.

Aufgabe der vorliegenden Erfindung ist es, eine alternative Verwendung für eine ein Polymer und eine ionische Flüssigkeit umfassende Zusammensetzung anzugeben, bei welcher durch die Zusammensetzung besonders vorteilhafte Eigenschaften bewirkt werden.

Die Aufgabe wird durch die Merkmale des Anspruchs 1 gelöst. Zweckmäßige Ausgestaltungen ergeben sich aus den Merkmalen der Ansprüche 2 bis 10.

Erfindungsgemäß ist eine Verwendung einer eine ionische Flüssigkeit oder ein Gemisch ionischer Flüssigkeiten und ein polares Polymer umfassenden Zusammensetzung als Mittel zum Phlegmatisieren einer pyrotechnischen Wirkmasse vorgesehen. Dabei umfasst das Polymer Polyacrylnitril, Polyvinylnitrat, Polyvinylpyrrolidon (PVP) oder Nitrocellulose. Bei dem Mittel kann es sich um ein Bindemittel handeln. Die Zusammensetzung ist ein viskoelastisches Material, d. h. das Polymer ist in der ionischen Flüssigkeit oder dem Gemisch ionischer Flüssigkeiten in einer solchen Menge gelöst, dass das daraus entstehende Material viskoelastische Eigenschaften aufweist. Das viskoelastische Material ist dabei mindestens gerade so viskos, dass es keine von alleine davonfließende Flüssigkeit mehr ist. Das gilt für eine Temperatur oberhalb der Glasübergangstemperatur, die unter -54°C liegt. Anderenfalls wäre es eine Flüssigkeit aber kein viskoelastisches Material. Ein solches Material weist im Allgemeinen eine Fließgrenze von mindestens 10 Pa auf. Die Fließgrenze kann dabei mit dem Rehometer MCR 302 der Anton Paar GmbH, 8054 Graz, Österreich mittels einer Kegelplatte mit einem Durchmesser von 25 mm bei 71 °C und einer Oszillation mit einer Frequenz von 1 Hz mittels eines Amplitudentests bestimmt werden. Der Wert der Fließgrenze ist dabei derjenige Wert, bei dem die durch das viskoelastische Material übertragene Kraft gegenüber der im linear-viskoelastischen Bereich übertragenen Kraft um 5% herabgesetzt ist. Die Glasübergangstemperatur kann mittels des Geräts "DSC 200 F3 Maia®" der Firma Netzsch-Gerätebau GmbH, Selb, Deutschland bestimmt werden. Das Gerät arbeitet nach der Methode der dynamischen Differenzkalorimetrie (DSC). Die genannten Polymere sind gewerblich günstig zu erhalten und lösen sich schnell und ohne Probleme in der ionischen Flüssigkeit oder dem Gemisch ionischer Flüssigkeiten und erhöhen dadurch die Viskosität der Flüssigkeit oder des Gemischs.

Bei der Verwendung als Mittel zum Phlegmatisieren einer pyrotechnischen Wirkmasse hat das viskoelastische Material besondere Vorteile. Es kann z. B. mit einer sehr hohen Dichte bereitgestellt werden. Dazu kann die Dichte der ionischen Flüssigkeit über 1100 kg/m³ liegen. Die hohe Dichte ermöglicht das Erreichen einer hohen spezifischen Leistung der pyrotechnischen Wirkmasse bei deren Abbrand oder Detonation. Die Leistung kann weiterhin dadurch gesteigert werden, dass die ionische Flüssigkeit oder das Gemisch ionischer Flüssigkeiten in dem viskoelastischen Material eine energetische ionische Flüssigkeit umfasst. Eine energetische ionische Flüssigkeit ist beispielsweise n-Butylmethylimidazoliumperchlorat (BMIM-ClO₄).

Weiterhin kann das Reaktionsverhalten des viskoelastischen Materials beim Erhitzen durch die Wahl des in der ionischen Flüssigkeit enthaltenden Anions variiert werden. Z. B. kann das Anion oxidierend sein, wie das z. B. bei Perchlorat oder Nitrat der Fall ist. Dadurch wird der durch Erhitzen bedingte Zerfall der ionischen Flüssigkeit exotherm. Es kann aber auch ein inertes Anion, wie beispielsweise Acetat, Dicyanamid, Hexafluorophosphat oder Tetrafluoroborat gewählt werden. Dann ist der Zerfall der ionischen Flüssigkeit zumindest am Beginn einer Erwärmung endotherm. Weiterhin hat die Wahl des Anions einen Einfluss auf die Zerfallstemperatur. Von den oben genannten Anionen zerfällt Acetat bei der niedrigsten und Tetrafluoroborat bei der höchsten Temperatur. Durch das Vorsehen eines Gemischs dieser Anionen in der ionischen Flüssigkeit bzw. dem Gemisch der ionischen Flüssigkeiten kann das temperaturabhängige Verhalten der daraus gebildeten ionischen Flüssigkeit bzw. des Gemischs beeinflusst werden. Durch diese Möglichkeiten können die Empfindlichkeit und das thermische Verhalten einer pyrotechnischen Wirkmasse eingestellt werden.

Das viskoelastische Material kann mit den genannten Polymeren eine gelartige Konsistenz aufweisen, die für viele Anwendungen im pyrotechnischen Bereich günstig ist. Dadurch, dass eine ionische Flüssigkeit bei den üblichen Temperaturen nicht flüchtig ist, migriert sie im Gegensatz zu bekannten Weichmachern, wie beispielsweise Dioctyladipat, in einer sie enthaltenden pyrotechnischen Wirkmasse nicht. Dadurch verändern sich Eigenschaften einer mittels des viskoelastischen Materials gebundenen Wirkmasse auch nach langer Lagerung nicht. Insbesondere eine durch das viskoelastische Material erreichte Phlegmatisierung und eine damit einhergehende Insensitivität der Wirkmasse bleiben auch bei langer Lagerung erhalten. Mit dem viskoelastischem Material hergestellte pyrotechnische Wirkmassen sind dadurch erheblich sicherer als mit bekannten Weichmachern hergestellte Wirkmassen.

Sehr vorteilhaft ist weiterhin, dass ionische Flüssigkeiten einen sehr tiefen Gefrierpunkt bzw. eine sehr tiefe Glasübergangstemperatur aufweisen und das viskoelastische Material daher auch bei sehr geringen Temperaturen viskoelastisch bleibt. Die Glasübergangstemperatur des viskoelastischen Materials kann unter -54°C liegen. Es ist dann besonders gut zur Phlegmatisierung pyrotechnischer Wirkmassen für einen militärischen Einsatz geeignet.

Die erfindungsgemäße Verwendung ist durch den Stand der Technik nicht nahegelegt. Bei den bekannten Verwendungen sind andere Eigenschaften der Zusammensetzung aus einem Polymer und einer ionischen Flüssigkeit relevant als bei der erfindungsgemäßen Verwendung. Bei keiner der bekannten Verwendungen spielt das Erreichen einer hohen Dichte, das Abbrandverhalten, die Möglichkeit der Teilnahme an einer Redoxreaktion und die für eine lange Lagerungszeit über einen großen Temperaturbereich gegebene Phlegmatisierungswirkung bei pyrotechnischen Wirkmassen eine Rolle.

Eigenschaften des viskoelastischen Materials können durch Mischen verschiedener ionischer Flüssigkeiten und durch Variieren der Anionen und Kationen an die jeweiligen Erfordernisse angepasst werden. Bei einem Gemisch aus einer Mehrzahl ionischer Flüssigkeiten bleiben die Eigenschaften des Gemischs langfristig unverändert, wenn entweder das Anion oder das Kation für alle ionischen Flüssigkeiten in dem Gemisch dasselbe ist.

Ein weiterer Vorteil des viskoelastischen Materials besteht darin, dass es mit einer großen Zahl gebräuchlicher Kunststoffe und Elastomere, wie z. B. Polyester, Polyamide, Polyolefine, Polytetrafluorethylen (Teflon®), Polyacryle, Polycarbonate, Nitril-Butadien-Kautschuk, Chloropren-Kautschuk (Neopren®) und Fluorkautschuk (Viton®), unbegrenzt verträglich ist und diese nicht, wie übliche Weichmacher enthaltende Materialien, angreift.

Durch die ionische Flüssigkeit ist das viskoelastische Material elektrisch leitfähig. Dadurch kann es beispielsweise einer pyrotechnischen Wirkmasse eine elektrische Leitfähigkeit verleihen, so dass dadurch elektrostatische Entladungen an der pyrotechnischen Wirkmasse vermieden werden können.

Bei einer Ausgestaltung des viskoelastischen Materials sind darin 0,1 bis 80 Gew.-%, insbesondere 10 bis 65 Gew.-%, insbesondere 25 bis 40 Gew.-%, des Polymers enthalten. Umgekehrt können darin 20 bis 99,9 Gew.-%, insbesondere 35 bis 90 Gew.-%, insbesondere 60 bis 75 Gew.-%, der ionischen Flüssigkeit oder des Gemischs ionischer Flüssigkeiten enthalten sein.

Die ionische Flüssigkeit oder das Gemisch ionischer Flüssigkeiten kann ein Perchlorat-, Nitrat-, Acetat-, Dicyanamid-, Hexafluorophosphat- oder Tetrafluoroborat-Ion als Anion umfassen.

Bei einer weiteren Ausgestaltung umfasst die ionische Flüssigkeit oder das Gemisch ionischer Flüssigkeiten 1-Butyl-3-methylimidazoliumtetrafluoroborat (BMIM-BF₄), 1-Butyl3-methylimidazoliumdicyanamid (BMIM-C₂N₂), n-Butylmethylimidazoliumperchlorat (BMIM-ClO₄), ein Alkyl-Methylimidazol, insbesondere Dimethylimidazol oder Ethylmethylimidazol, ein Tetrazolat oder ein Triazolat.

Das Gemisch ionischer Flüssigkeiten kann mindestens zwei unterschiedliche Anionen oder mindestens zwei unterschiedliche Kationen umfassen, wobei das jeweilige Gegenion für alle unterschiedliche Anionen oder Kationen identisch ist. In einem solchen Gemisch ändert sich die Zusammensetzung mit der Zeit nicht. Dieses Gemisch ionischer Flüssigkeiten ist daher sehr lange lagerfähig, ohne dass sich dessen Eigenschaften verändern.

Bei einer Ausgestaltung der erfindungsgemäßen Verwendung wird eine solche Menge des viskoelastischen Materials verwendet, dass die ionische Flüssigkeit in der pyrotechnischen Wirkmasse mit einem Anteil im Bereich von 0,1 bis 12 Gew.-%, insbesondere 3 bis 7 Gew.-%, insbesondere 4 bis 6 Gew.-%, enthalten ist. Die pyrotechnische Wirkmasse kann einen, insbesondere kristallinen, partikulären Sprengstoff umfassen. Bei einem solchen Sprengstoff ist die durch die Verwendung des viskoelastischen Materials erreichbare Phlegmatisierung besonders wichtig, um die pyrotechnische Wirkmasse sicher handhaben zu können.

Bei dem Sprengstoff kann es sich um Oktogen, Hexogen, Nitropenta (PETN), Triaminotrinitrobenzol (TATB), Diaminodinitroethylen (FOX-7) oder Hexanitroisowurtzitan (CL-20) handeln.

Nachfolgend wird die Erfindung anhand von Ausführungsbeispielen näher erläutert. Dabei wurde für eine Vielzahl von viskoelastischen Materialien die für eine Anwendung als Phlegmatisierungsmittel oder Bindemittel in einer pyrotechnischen Wirkmasse entscheidende Glasübergangstemperatur bestimmt. Dies erfolgte mittels des Geräts "DSC 200 F3 Maia®" der Firma Netzsch-Gerätebau GmbH, Selb, Deutschland. Das Gerät kann nur Glasübergangstemperaturen bis -150°C messen. Darunter liegende Glasübergangstemperaturen konnten daher nicht ermittelt werden.

200 g der in einigen der nachfolgend angegebenen viskoelastischen Materialien verwendeten ionischen Flüssigkeit BMIM-ClO₄ wurden wie folgt synthetisiert:
150 g BMIM-Cl wurden in ca. 600 ml trockenem Methanol bei 25°C in einem 2 Liter Einhalskolben aufgelöst. Eine stöchiometrische Menge trockenes Natriumperchlorat wurde ebenfalls in 600 ml trockenem Methanol in einem 2 Liter Einhalskolben getrennt aufgelöst. Dann wurde die gesamte Perchloratlösung auf einmal in die BMIM-Chloridlösung gegeben. Die Flasche, in der die Perchloratlösung war, wurde noch 3 x mit 50 ml trockenem Methanol gewaschen und das Methanol auch noch zu der BMIM-Chloridlösung gegeben. Die resultierende Lösung wurde nach einigen Minuten trüb und gelb, als das entstandene Natriumchlorid begann auszufallen.

Die gesamte Lösung wurde anschließend eine Stunde unter Rückfluss gekocht. Die heiße Lösung wurde danach mittels einer Fritte in einen 2 Liter Einhalskolben filtriert und der Niederschlag noch 3 x mit 50 ml trockenem Methanol gewaschen. Der praktisch ausschließlich aus Kochsalz bestehende Filterkuchen wurde entsorgt.

Der Einhalskolben wurde anschließend an einen Rotationsverdampfer angeschlossen und das Methanol unter ca. 500 mbar Druck abdestilliert, wobei das Wasserbad im Verdampfer auf 90°C erhitzt wurde. Als das Methanol abdestilliert war, wurde das warme rohe BMIM-ClO₄ aus dem Kolben nochmals durch die Fritte in einen 250 ml Scheidetrichter filtriert, weil beim Verdampfen des Methanols noch weiteres Kochsalz ausgefallen ist.

Das fertige BMIM-ClO₄ (ein gelbliches, zähflüssiges Öl) wurde aus dem Scheidetrichter in eine Laborflasche gefüllt und gewogen. Die Ausbeute war nahezu quantitativ.

### Beispiel 1:

Viskoelastisches Material mit herkömmlichem Weichmacher, Glasübergangstemperatur -55°C, Dichte 932 kg/m³

| Stoff | Typ | Gew.-% | Sonstiges |
|---|---|---|---|
| Acrylatgummi | Hytemp 4454 | 25,0 | TMD = 932 |
| Dioctyladipat | Weichmacher | 75,0 | |

| | | | |
|---|---|---|---|
| TMD = Theoretische maximale Dichte | | | |

### Beispiel 2:

Viskoelastisches Material ohne Weichmacher, Glasübergangstemperatur -48°C, Dichte 1260 kg/m³

| Stoff | Typ | Gew.-% | Sonstiges |
|---|---|---|---|
| Chlorparaffin | Leuna CP 52 flüssig | 100,0 | TMD = 1260 |

### Beispiel 3:

Erfindungsgemäß zu verwendendes viskoelastisches Material, Glasübergangstemperatur -120°C, Dichte 1207 kg/m³

| Stoff | Typ | Gew.-% | Sonstiges |
|---|---|---|---|
| Polyvinylpyrrolidon | Serva 33410 Mr 1.1 · 10⁶ | 25,0 | |
| BMIM-BF₄ | Merck | 75,0 | TMD = 1207 |

### Beispiel 4:

Erfindungsgemäß zu verwendendes viskoelastisches Material, Glasübergangstemperatur nicht gemessen, Dichte 1092 kg/m³

| Stoff | Typ | Gew.-% | Sonstiges |
|---|---|---|---|
| Polyvinylpyrrolidon | Serva 33410 Mr 1.1 · 10⁶ | 25,0 | |
| BMIM-NC₂N₄ | Merck | 75,0 | TMD = 1092 |

### Beispiel 5:

Erfindungsgemäß zu verwendendes viskoelastisches Material, Glasübergangstemperatur <-150°C (mit verwendetem Gerät nicht messbar), Dichte 1247 kg/m³

| Stoff | Typ | Gew.-% | Sonstiges |
|---|---|---|---|
| Polyvinylpyrrolidon | Serva 33410 Mr 1.1 · 10⁶ | 25,0 | |
| BMIM-ClO₄ | selbst synthetisiert | 75,0 | TMD = 1247 |

### Beispiel 6:

Erfindungsgemäß zu verwendendes viskoelastisches Material, Glasübergangstemperatur -68°C, Dichte 1289 kg/m³

| Stoff | Typ | Gew.-% | Sonstiges |
|---|---|---|---|
| Nitrocellulose | Hagedorn H24 | 25,0 | |
| BMIM-BF₄ | Merck | 75,0 | TMD = 1289 |

### Beispiel 7:

Erfindungsgemäß zu verwendendes viskoelastisches Material, Glasübergangstemperatur nicht gemessen, Dichte 1157 kg/m³

| Stoff | Typ | Gew.-% | Sonstiges |
|---|---|---|---|
| Nitrocellulose | Hagedorn H24 | 25,0 | |
| BMIM-NC₂N₄ | Merck | 75,0 | TMD = 1157 |

### Beispiel 8:

Erfindungsgemäß zu verwendendes viskoelastisches Material, Glasübergangstemperatur -112°C, Dichte 1333 kg/m³

| Stoff | Typ | Gew.-% | Sonstiges |
|---|---|---|---|
| Nitrocellulose | Hagedorn H24 | 25,0 | |
| BMIM-ClO₄ | selbst synthetisiert | 75,0 | TMD = 1333 |

## Patentansprüche

1. Verwendung einer ein polares Polymer und eine ionische Flüssigkeit oder ein Gemisch ionischer Flüssigkeiten umfassenden Zusammensetzung als Mittel zum Phlegmatisieren und Binden einer pyrotechnischen Wirkmasse,
wobei die Zusammensetzung ein durch Lösen des Polymers in der ionischen Flüssigkeit oder dem Gemisch ionischer Flüssigkeiten gebildetes viskoelastisches Material ist, wobei das Polymer Polyacrylnitril, Polyvinylnitrat, Polyvinylpyrrolidon (PVP) oder Nitrocellulose umfasst.

2. Verwendung nach Anspruch 1,
wobei das viskoelastische Material eine gelartige Konsistenz aufweist.

3. Verwendung nach einem der vorhergehenden Ansprüche,
wobei in dem viskoelastischen Material 0,1 bis 80 Gew.-%, insbesondere 10 bis 65 Gew.-%, insbesondere 25 bis 40 Gew.-%, des Polymers enthalten sind.

4. Verwendung nach einem der vorhergehenden Ansprüche,
wobei in dem viskoelastischen Material 20 bis 99,9 Gew.-%, insbesondere 35 bis 90 Gew.-%, insbesondere 60 bis 75 Gew.-%, der ionischen Flüssigkeit oder des Gemischs ionischer Flüssigkeiten enthalten sind.

5. Verwendung nach einem der vorhergehenden Ansprüche,
wobei die ionische Flüssigkeit oder das Gemisch ionischer Flüssigkeiten ein Perchlorat-, Nitrat-, Acetat-, Dicyanamid-, Hexafluorophosphat- oder Tetrafluoroborat-Ion als Anion umfasst.

6. Verwendung nach einem der vorhergehenden Ansprüche,
wobei die ionische Flüssigkeit oder das Gemisch ionischer Flüssigkeiten 1-Butyl-3-methylimidazoliumtetrafluoroborat (BMIM-BF₄), 1-Butyl-3-methylimidazoliumdicyanamid (BMIM-C₂N₂), n-Butylmethylimidazoliumperchlorat (BMIM-ClO₄), ein Alkyl-Methylimidazol, insbesondere Dimethylimidazol oder Ethylmethylimidazol, ein Tetrazolat oder ein Triazolat umfasst.

7. Verwendung nach einem der vorhergehenden Ansprüche,
wobei das Gemisch ionischer Flüssigkeiten mindestens zwei unterschiedliche Anionen oder mindestens zwei unterschiedliche Kationen umfasst, wobei das jeweilige Gegenion für alle unterschiedlichen Anionen oder Kationen identisch ist.

8. Verwendung nach einem der vorhergehenden Ansprüche,
wobei eine solche Menge des viskoelastischen Materials verwendet wird, dass die ionische Flüssigkeit in der pyrotechnischen Wirkmasse mit einem auf das Gesamtgewicht der Wirkmasse bezogenen Anteil im Bereich von 0,1 bis 12 Gew.-%, 3 bis 7 Gew.-%, insbesondere 4 bis 6 Gew.-%, enthalten ist.

9. Verwendung nach einem der vorhergehenden Ansprüche,
wobei die pyrotechnische Wirkmasse einen, insbesondere kristallinen, partikulären Sprengstoff umfasst.

10. Verwendung nach Anspruch 9,
wobei der Sprengstoff Oktogen, Hexogen, Nitropenta (PETN), Triaminotrinitrobenzol (TATB), Diaminodinitroethylen (FOX-7) oder Hexanitroisowurtzitan (CL-20) ist.

## Claims

1. Use of a composition comprising a polar polymer and an ionic liquid or a mixture of ionic liquids as agent for stabilizing and binding an active pyrotechnic composition, wherein the composition is a viscoelastic material formed by dissolving the polymer in the ionic liquid or the mixture of ionic liquids and the polymer comprises polyacrylonitrile, polyvinyl nitrate, polyvinylpyrrolidone (PVP) or nitrocellulose.

2. Use according to Claim 1, wherein the viscoelastic material has a gel-like consistency.

3. Use according to either of the preceding claims, wherein from 0.1 to 80% by weight, in particular from 10 to 65% by weight, in particular from 25 to 40% by weight, of the polymer is present in the viscoelastic material.

4. Use according to any of the preceding claims, wherein from 20 to 99.9% by weight, in particular from 35 to 90% by weight, in particular from 60 to 75% by weight, of the ionic liquid or the mixture of ionic liquids is present in the viscoelastic material.

5. Use according to any of the preceding claims, wherein the ionic liquid or the mixture of ionic liquids comprises a perchlorate, nitrate, acetate, dicyanamide, hexafluorophosphate or tetrafluoroborate ion as anion.

6. Use according to any of the preceding claims, wherein the ionic liquid or the mixture of ionic liquids comprises 1-butyl-3-methylimidazolium tetrafluoroborate (BMIM-BF₄), 1-butyl-3-methylimidazolium dicyanamide (BMIM-C₂N₂), n-butylmethylimidazolium perchlorate (BMIM-ClO₄), an alkylmethylimidazole, in particular dimethylimidazole or ethylmethylimidazole, a tetrazolate or a triazolate.

7. Use according to any of the preceding claims, wherein the mixture of ionic liquids comprises at least two different anions or at least two different cations, with the respective counterion being identical for all different anions or cations.

8. Use according to any of the preceding claims, wherein the viscoelastic material is used in such an amount that the ionic liquid is present in the active pyrotechnic composition in a proportion based on the total weight of the active composition in the range from 0.1 to 12% by weight, from 3 to 7% by weight, in particular from 4 to 6% by weight.

9. Use according to any of the preceding claims, wherein the active pyrotechnic composition comprises an, in particular crystalline, particulate explosive.

10. Use according to Claim 9, wherein the explosive is octogen, hexogen, nitropenta (PETN), triaminotrinitrobenzene (TATB), diaminodinitroethylene (FOX-7) or hexanitroisowurtzitane (CL-20).

## Revendications

1. Utilisation d'une composition comprenant un polymère polaire et un liquide ionique ou un mélange de liquides ioniques, en tant qu'agent pour la phlegmatisation et la liaison d'une matière active pyrotechnique,
la composition étant une matière viscoélastique formée par dissolution du polymère dans le liquide ionique ou le mélange de liquides ioniques, le polymère comprenant le polyacrylonitrile, le poly(nitrate de vinyle), la polyvinylpyrrolidone (PVP) ou la nitrocellulose.

2. Utilisation selon la revendication 1,
dans laquelle la matière viscoélastique a une consistance gélatineuse.

3. Utilisation selon l'une quelconque des revendications précédentes,
dans laquelle 0,1 à 80 % en poids, en particulier 10 à 65 % en poids, en particulier 25 à 40 % en poids du polymère sont contenus dans la matière viscoélastique.

4. Utilisation selon l'une quelconque des revendications précédentes,
dans laquelle 20 à 99,9 % en poids, en particulier 35 à 90 % en poids, en particulier 60 à 75 % en poids du liquide ionique ou du mélange de liquides ioniques sont contenus dans la matière viscoélastique.

5. Utilisation selon l'une quelconque des revendications précédentes,
dans laquelle le liquide ionique ou le mélange de liquides ioniques comprend en tant qu'anion un ion perchlorate, nitrate, acétate, dicyanamido, hexafluorophosphate ou tétrafluoroborate.

6. Utilisation selon l'une quelconque des revendications précédentes,
dans laquelle le liquide ionique ou le mélange de liquides ioniques comprend du tétrafluoroborate de 1-butyl-3-méthylimidazolium (BMIM-BF₄), du dicyanamidure de 1-butyl-3-méthylimidazolium (BMIM-C₂N₂), du perchlorate de n-butylméthylimidazolium (BMIM-ClO₄), un alkyl-méthylimidazole, en particulier du diméthylimidazole ou de l'éthylméthylimidazole, un tétrazolate ou un triazolate.

7. Utilisation selon l'une quelconque des revendications précédentes,
dans laquelle le mélange de liquides ioniques comprend au moins deux anions différents ou au moins deux cations différents,
l'ion opposé respectif étant identique pour tous les différents anions ou cations.

8. Utilisation selon l'une quelconque des revendications précédentes,
dans laquelle on utilise une quantité telle de la matière viscoélastique que le liquide ionique est contenu dans la matière active pyrotechnique en une proportion, par rapport au poids total de la matière active, dans la plage de 0,1 à 12 % en poids, 3 à 7 % en poids, en particulier 4 à 6 % en poids.

9. Utilisation selon l'une quelconque des revendications précédentes,
dans laquelle la matière active pyrotechnique comprend un explosif particulaire, en particulier cristallin.

10. Utilisation selon la revendication 9,
dans laquelle l'explosif est l'octogène, l'hexogène, le nitropenta (PETN), le triaminotrinitrobenzène (TATB), le diaminodinitroéthylène (FOX-7) ou l'hexanitroisowurzitane (CL-20).
